# FASCICULE DE BREVET EUROPEEN

(11) **EP 0 480 791 B1**
(45) Date de publication et mention de la délivrance du brevet: **12.01.1994**
(21) Numéro de dépôt: 91402573.9
(22) Date de dépôt: 26.09.1991
(51) Int. Cl.: B60P 1/44

(54) **Hayon élévateur comportant une butée de maintien d'un chariot sur sa plate-forme**
Hebbare Ladebordwand mit einem Anschlag zum Halten einer Transportkarre auf ihrer Plattform
Liftable loading tailgate with a stop for locking a carriage on its platform

(30) Priorité: 02.10.1990 FR 9012132
(43) Date de publication de la demande: 15.04.1992
(73) Titulaire: HYDRIS SOCIETE ANONYME, F-35220 Chateaubourg (FR)
(72) Inventeur: Tortellier, Christian, F-35530 Noyal sur Vilaine (FR)
(74) Mandataire: Hoisnard, Jean-Claude

(56) Documents cités:
- EP-A- 0 271 441
- DE-U- 7 637 158

## Description

Certains véhicules, notamment des camions, sont munis de hayons élévateurs qui facilitent le chargement et le déchargement de chariots de manutention des marchandises transportées.

Les plus perfectionnés des hayons élévateurs connus comportent des butées, escamotables dans la plate-forme, qui permettent, bien entendu, en s'escamotant, le passage des roues des chariots aussi bien pendant les opérations de chargement que pendant celles de déchargement, et qui ont d'abord pour fonction première d'empêcher tout déplacement non désiré d'un chariot, initialement placé sur la plate-forme du hayon, hors de cette plate-forme.

DE-A-2 757 763 selon le préambule de la revendication 1 représente un tel hayon, dont la ou les butées, attelées à des ressorts de rappel, sont maintenues, en permanence, soit en configuration d'escamotage dans la plate-forme, soit en saillie par rapport à la face supérieure de la plate-forme. Cette disposition est telle que, lorsque la plate-forme est en appui sur le sol et légèrement inclinée par rapport à celui-ci, l'utilisateur doit simultanément, au cours d'un chargement, pousser le chariot et commander l'escamotage de la butée pour bloquer les roues du chariot après passage sur la butée. Pendant cette opération, l'utilisateur est en appui et en déséquilibre sur un seul pied, avec risque d'accident.

L'invention entend remédier à cet inconvénient en concevant une butée qui, dans la configuration en saillie par rapport à la plate-forme, serait apte à s'escamoter automatiquement lors du passage de la roue d'un chariot pendant une phase de chargement du chariot sur la plate-forme et à reprendre automatiquement ladite configuration en saillie après passage de ladite roue, afin d'éviter tout déchargement accidentel dudit chariot.

L'invention est donc relative à un hayon élévateur attelé au plateau de transport d'un véhicule et comportant une plate-forme susceptible de constituer le support temporaire d'un chariot ou analogue muni d'organes de roulement ; une butée de maintien d'un tel chariot sur la plate-forme comprenant un volet, qui est monté pivotant, autour d'un axe de volet, par rapport à la plate-forme, qui comporte une lisière mobile, et, qui est susceptible d'occuper deux positions particulières par rapport à la plate-forme, une première position dans laquelle la face supérieure du volet est contenue dans le plan de la face supérieure de la plate-forme, et, une deuxième position dans laquelle la face supérieure du volet est décalée angulairement par rapport à la face supérieure de la plate-forme, ladite lisière mobile étant alors disposée en saillie par rapport à ladite face supérieure de la plate-forme ; et un organe élastique attelé entre la plate-forme et le volet et exerçant sur ledit volet une force de rappel dont l'effet, d'une part, dans la première position du volet, est de maintenir ledit volet dans sa première position, d'autre part, dans la deuxième position du volet, est de rappeler ledit volet dans sa deuxième position.

Selon l'invention, les dispositions suivantes sont adoptées : a) l'organe élastique est attelé à la plate-forme par l'intermédiaire d'un bras, qui est monté mobile par rapport à la plate-forme entre deux positions extrêmes et qui est donc susceptible de modifier la position de l'attache de l'organe élastique par rapport à la plate-forme ; b) dans la première position du volet, d'une part, dans sa première position extrême, le bras a placé ladite attache de l'organe élastique de manière que la ligne joignant les points d'attache de l'organe élastique sur le bras et sur le volet soit disposée d'un premier côté de l'axe de pivotement du volet par rapport à la plate-forme et que l'effet de rappel de l'organe élastique sur le volet tende à maintenir ledit volet dans sa première position, d'autre part, dans sa deuxième position extrême, le bras a placé ladite attache de l'organe élastique de manière que la ligne joignant les points d'attache de l'organe élastique sur le bras et sur le volet soit disposée du côté de l'axe de pivotement du volet par rapport à la plate-forme opposé audit premier côté et qu'alors l'effet de rappel de l'organe élastique sur le volet tende à pousser ledit volet vers sa deuxième position ; et, c) ledit bras est attelé à une commande volontaire de sélection de ses deux positions extrêmes, apte à le placer, à la volonté d'un utilisateur, dans l'une ou l'autre desdites deux positions extrêmes.

Les avantageuses dispositions suivantes sont en outre de préférence adoptées :
- le bras est monté à pivotement par rapport à la plate-forme ;
- le bras est solidaire d'un arbre de bras qui en réalise le montage à pivotement, cependant que la commande de sélection de position du bras comprend au moins un levier à deux positions, qui est solidaire dudit bras vis-à-vis du pivotement ;
- le levier est constitué par un boulon, qui est vissé dans l'arbre de bras ;
- l'organe élastique est constitué par un ressort de compression ;
- la plate-forme est réalisée en un matériau extrudé, tel qu'un alliage d'aluminium, les logements des arbres réalisant les pivotements du volet et du bras par rapport à la plate-forme étant formés lors de l'extrusion de ladite plate-forme ;
- le volet est solidaire d'un arbre de volet, dont une dimension transversale externe est au plus égale à celle d'une ouverture longitudinale que comporte un logement d'arbre ménagé dans la plate-forme, ce qui permet l'introduction dudit arbre de volet dans ledit logement, cependant qu'un coussinet, ayant une forme correspondant à l'espace compris entre l'arbre de volet et son logement, est introduit, par une extrémité longitudinale de l'arbre de volet, dans ledit espace et placé entre ledit arbre de volet et son logement ;
- l'arbre de volet a une face cylindrique circulaire, dont le diamètre est supérieur à la largeur de l'ouverture longitudinale du logement et qui est munie d'un méplat, la distance entre le méplat et la face cylindrique opposée de l'arbre de volet étant au plus égale à ladite largeur de l'ouverture longitudinale.

L'avantage principal de l'invention est de réaliser un hayon élévateur muni d'une butée qui peut être placée dans les configurations classiques, mais qui, en outre, peut s'effacer sous la pression d'une roue de chariot lors d'un chargement et reprendre automatiquement sa configuration en saillie par rapport à la plate-forme après passage de la roue. Cette automaticité des deux déplacements de la butée (escamotage et remise en saillie) supprime les manoeuvres hasardeuses antérieures et les risques d'accidents correspondants.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une vue perspective de la partie arrière d'un camion muni d'un hayon élévateur conforme à l'invention ;
- la figure 2 est une vue en élévation du hayon élévateur représenté sur la figure 1, pendant le chargement d'un chariot ;
- les figures 3,4 et 5 sont des coupes longitudinales du hayon élévateur de la figure 2 illustrant trois configurations distinctes de ce hayon élévateur ;
- les figures 6 et 7 sont des coupes longitudinales du hayon élévateur de la figure 2 mettant en évidence un détail de sa réalisation, dans deux configurations de montage ; et,
- la figure 8 est une vue perspective d'un élément du montage des figures 6 et 7.

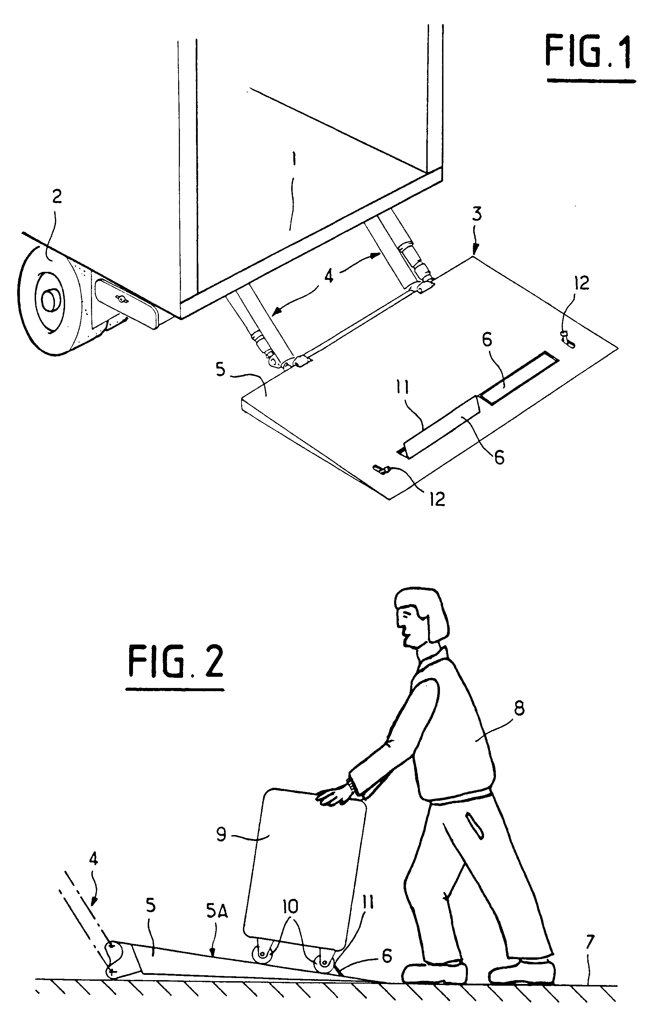

La figure 1 représente un camion, qui comporte un plateau 1 de transport des marchandises reposant sur le sol par l'intermédiaire de ses roues 2. Un hayon élévateur 3 est attelé au plateau 1 par l'intermédiaire de deux parallélogrammes déformables 4, qui permettent le réglage de la hauteur de la plate-forme 5 du hayon élévateur par rapport au plateau 1, tout en maintenant horizontale la face supérieure de cette plate-forme et en rendant cependant possible une légère inclinaison de cette plate-forme par rapport au sol lors de l'appui de la plate-forme sur le sol. La plate-forme 5 comporte deux butées comprenant chacune un volet 6 susceptible, soit d'être contenu dans le plan de la face supérieure de la plate-forme (le volet d'une des butées est représenté dans cette première position), soit d'être disposé en saillie par rapport au plan de la face supérieure de la plate-forme (le volet de l'autre butée est représenté dans cette deuxième position).

La figure 2 représente la plate-forme 5 en appui sur le sol 7, la face supérieure 5A de la plate-forme étant légèrement inclinée par rapport à la surface du sol, et un utilisateur 8 poussant un chariot 9 de manutention de marchandises sur la plate-forme, chariot muni de roues 10, dont certaines sont en appui sur la lisière 11 du volet 6 disposé en saillie par rapport à la face supérieure 5A de la plate-forme. Dans cette configuration, le chariot 9 ne peut pas redescendre par inadvertance la face inclinée 5A, le volet 6 interdisant ce déplacement.

A noter la présence, au-dessus de la face supérieure de la plate-forme 5, de deux leviers 12 (figure 1), dont la fonction sera précisée ultérieurement.

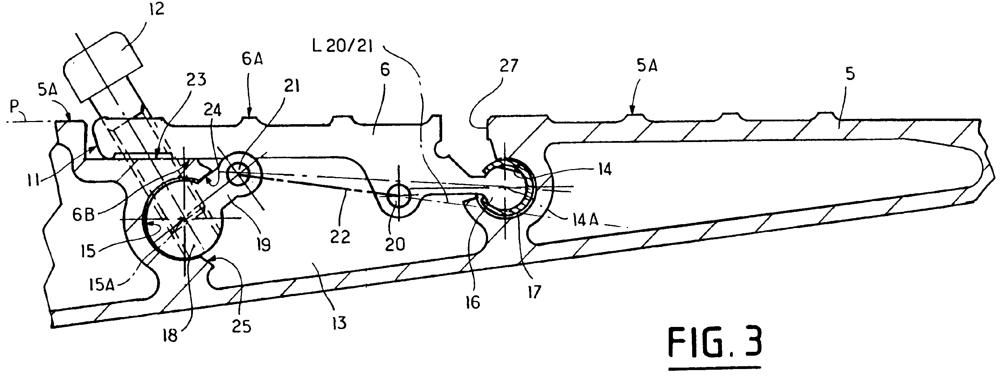

La figure 3 représente le volet 6, dans la configuration dans laquelle sa face supérieure 6A est contenue dans le plan P de la face supérieure 5A de la plate-forme 5 et dans laquelle ledit volet est entièrement escamoté à l'intérieur d'un logement 13 prévu à cet effet dans la plate-forme 5. Deux paliers 14 et 15, de sections circulaires, sont ménagés dans la plate-forme 5, à l'intérieur du logement 13, et reçoivent à pivotement autour de leurs axes respectifs 14A,15A, le palier 14, un arbre de volet 16, solidaire du volet 6, avec interposition d'un coussinet 17, et, le palier 15, un arbre de bras 18, dont un bras 19 est solidaire vis-à-vis du pivotement.

Le volet 6 et le bras 19 comportent chacun un oeil 20,21, qui permettent l'accrochage des extrémités d'un ressort 22 schématisé par un trait mixte. Ce ressort peut avantageusement être constitué par une lame ou un fil conformé en un W et être un ressort de compression qui, dans le montage représenté, a tendance à se détendre (à écarter ses extrémités).

Dans la configuration de la figure 3, la ligne L20/21, qui joint les yeux 20 et 21 et qui constitue la ligne d'action de la force de rappel développée par le ressort 22, est disposée d'un premier côté de l'axe 14A du pivotement du volet 6, la force de rappel du ressort développant un couple de pivotement sur le volet 6, autour de l'axe de pivotement 14, qui tend à maintenir ledit volet dans sa position, la face inférieure 6B de son extrémité libre étant en appui sur la face supérieure d'un rebord 23 que comporte le logement 13.

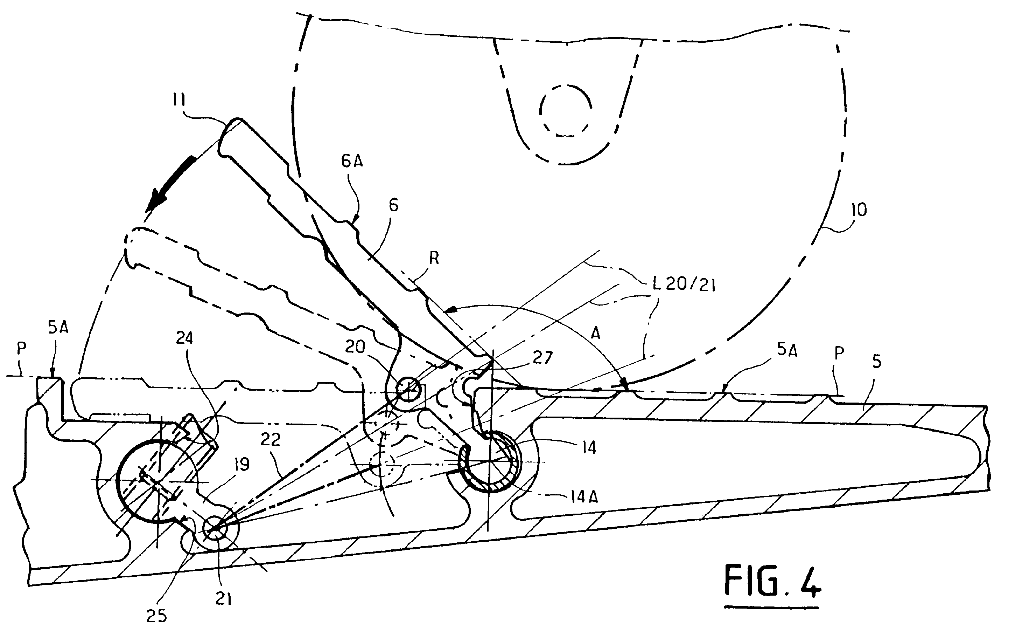

Un levier 12, constitué par un boulon, est vissé dans l'arbre de bras 18, en est ainsi rendu solidaire et constitue une commande volontaire du pivotement du bras 19. Ce bras 19 peut donc, à la volonté de l'utilisateur, être placé dans l'une de ses deux positions extrêmes représentées, la première position extrême sur la figure 3, le bras 19 étant alors en appui sur une première face de butée 24 de la plate-forme 5, qui en limite le pivotement dans un sens, et, la deuxième position extrême représentée sur la figure 4, le bras 19 étant en appui sur une deuxième face de butée 25 de la plate-forme 5, qui en limite le pivotement dans l'autre sens.

Le levier 12 peut être basculé de manière à placer le bras 19 dans sa deuxième position extrême de la figure 4. Le volet 6 a été représenté dans trois positions différentes sur la figure 4 : une position en traits continus, dans laquelle le plan R de la face supérieure 6A du volet fait un angle A maximal avec le plan P passant par la face supérieure 5A de la plate-forme 5 ; la position de la figure 3 et une position intermédiaire, toutes deux en traits interrompus, la position intermédiaire étant comprise entre celle de la figure 3 et celle représentée en traits continus sur la figure 4.

Dans toutes ces positions, compte tenu de la position de l'oeil 21, nouvelle par rapport à celle représentée sur la figure 3, la ligne L20/21 est toujours disposée du côté de l'axe 14A du pivotement du volet 6 qui est opposé à celui de la figure 3, c'est-à-dire dans une configuration dans laquelle le couple de rappel développé par le ressort 22 sur le volet 6 tend à pousser ce volet 6 vers la position en traits continus, ou à l'y maintenir. Dans cette position, la lisière 11 est en saillie par rapport au plan P. La roue 10 d'un chariot a été représentée, sur la figure 4, au moment où elle a déjà repoussé le volet 6 de sa position en traits continus jusqu'à sa position intermédiaire.

Il est enfin possible, à partir de la configuration de la figure 4, de replacer le bras 19 dans sa première position extrême (celle de la figure 3). La ligne L20/21 est disposée soit d'un côté, soit de l'autre côté de l'axe de pivotement 14A du volet 6, de sorte qu'à partir de la position en traits continus, analogue à celle, également en traits continus de la figure 4, dans laquelle le ressort 22 tend à maintenir le volet en saillie par rapport au plan P, le pied 26 d'un utilisateur peut faire pivoter le volet 6 jusqu'à la position en traits interrompus, qui est identique à celle de la figure 3, dans laquelle le ressort 22 a pour effet de maintenir le volet 6 de manière que sa face supérieure 6A reste contenue dans le plan P.

A noter qu'en position de saillie complète (angle A de la figure 4), le volet 6 a son pivotement limité par appui sur une face de butée 27 de la plate-forme 5.

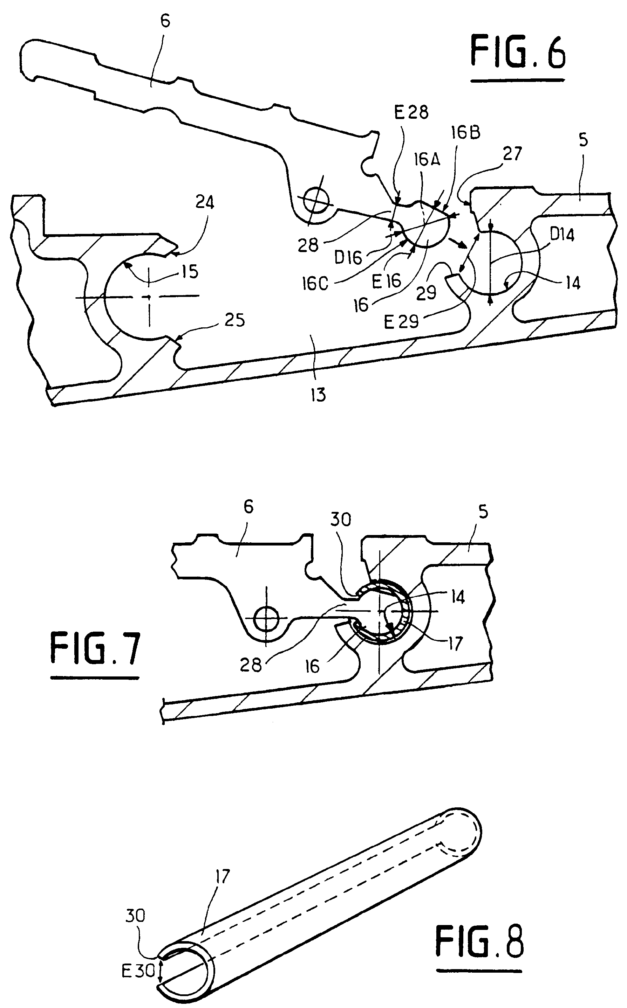

Les figures 6,7 et 8 illustrent les détails de réalisation permettant le montage à pivotement du volet 6. L'arbre de volet 16 est relié au volet 6 par une bande 28 d'épaisseur E28, inférieure à la fois aux plus petites dimensions respectives de l'arbre 16 et du volet 6. L'arbre de volet 16 comporte une face cylindrique 16C et un méplat 16B, l'épaisseur de l'arbre de volet, mesurée suivant un diamètre perpendiculaire au méplat 16B, passant par le centre 16A de l'arbre de volet 16, étant égale à E16. Le palier 14 présente une ouverture longitudinale 29 de largeur E29.

Les diverses dimensions présentent des valeurs relatives, tel que précisé ci-après :
- le diamètre D14 du palier 14 est supérieur au diamètre D16 de l'arbre de volet 16 (D14 >D 16), de sorte qu'après introduction de l'arbre de volet 16 dans le palier 14, un espace existe entre ces deux pièces et est occupé par le coussinet 17 (figure 7) ;
- l'épaisseur E16 est inférieure à la largeur E29 (E16<E29), ce qui permet l'introduction de l'arbre de volet 16 à l'intérieur de l'espace délimité par le palier 14 ;
- le coussinet 17 comporte une ouverture longitudinale 30, dont la largeur E30 est inférieure au diamètre D16 (E30<D16)de manière que l'arbre de volet 16, une fois introduit dans le coussinet 17, ne puisse pas s'en échapper ;
- enfin, les largeurs E29 et E30 sont, chacune, supérieures à l'épaisseur E28 de la bande 28 (E29>E28 et E30>E28), ce qui permet bien entendu le passage de la bande 28 à travers les ouvertures 29 et 30.

Il doit en outre être noté que la longueur d'un arbre de volet 16 peut, par exemple, être égale à 800 mm, la longueur d'un coussinet 17 étant considérablement plus petite : 80 mm par exemple. Par ailleurs, pour obtenir les paliers 14 et 15, et plus généralement la plate-forme 5, il est pratique de procéder par extrusion, d'un alliage d'aluminium par exemple. Dans ces conditions, le logement 13 n'est rendu accessible que par découpe de la plaque supérieure de la plate-forme 5.

En tenant compte de ces indications, le montage du volet 6 est réalisé comme suit : l'arbre de volet 16 est présenté en regard de l'ouverture 29 du palier 14, l'épaisseur E16 sensiblement parallèle à l'ouverture 29, de sorte que l'arbre de volet 16 peut traverser ladite ouverture 29 et être introduit dans le palier 14 ; un ou deux coussinets 17 sont alors présentés devant une extrémité longitudinale desdits arbre de volet 16 et palier 14, et introduits dans l'espace compris entre ces deux pièces, l'ouverture 30 étant bien entendu disposée en regard de la bande 28 pour en permettre le passage. A noter que les dimensions aussi bien de longueurs de l'arbre de volet 16 que du coussinet 17 pratiquement retenues rendent possible le montage qui vient d'être défini.

En variante, en remplacement de l'arbre de volet 16 muni de son méplat 16B, il serait possible de choisir un arbre de volet 16, sans méplat, ayant un diamètre D16 suffisamment petit pour passer à travers l'ouverture 29, tout en restant bien entendu supérieur à l'ouverture 30 (D16<E29 et D16>E30). Cette variante conduit par contre à diminuer la valeur du diamètre D16 par rapport à la première réalisation décrite, donc, également à augmenter l'épaisseur du coussinet 17 pour combler l'espace compris entre le palier 14 et l'arbre de volet 16.

Le fonctionnement a déjà été suggéré précédemment et peut donc être brièvement précisé.

Dans la configuration de la figure 3, le boulon 12 ayant été placé selon la volonté de l'utilisateur, dans sa première position, ce qui a provoqué la mise en place de l'arbre de bras 18 également dans sa première position extrême, l'effort de rappel du ressort 22 a un effet de maintien du volet 6 dans sa position, qui est donc une position stable, dans laquelle, par exemple, l'utilisateur peut retirer librement, par roulage sur le plan P, un chariot 9 hors de la plate-forme 5.

Dans les configurations de la figure 4, l'utilisateur a placé le boulon 12 dans sa deuxième position, et par suite également l'arbre de bras 18 dans sa deuxième position extrême. Quelle que soit la position du volet 6, l'effet du ressort 22 est, soit de rappeler le volet 6 vers sa position entièrement en saillie (en traits continus), soit de maintenir ce volet dans cette position. Ce sont les configurations correspondant par exemple au chargement, par roulage, d'un chariot 9 du sol 7 sur la plate-forme 5. Sans que l'utilisateur n'ait d'autre nécessité que celle de pousser le chariot 9 sur la plate-forme 5, la roue 10 appuie sur la face supérieure 6A du volet 6, fait basculer ce volet 6 depuis sa position en saillie jusqu'à celle d'escamotage complet dans laquelle la face supérieure 6A du volet 6 est contenue dans le plan P. Puis, après passage de la roue 10, le volet 6 reprend automatiquement sa position en saillie (en traits continus sur la figure 4), dans laquelle il constitue une butée 11 pour les roues 10 du chariot 9 (figure 2), ce qui évite tout retrait non désiré du chariot 9 hors de la plate-forme 5.

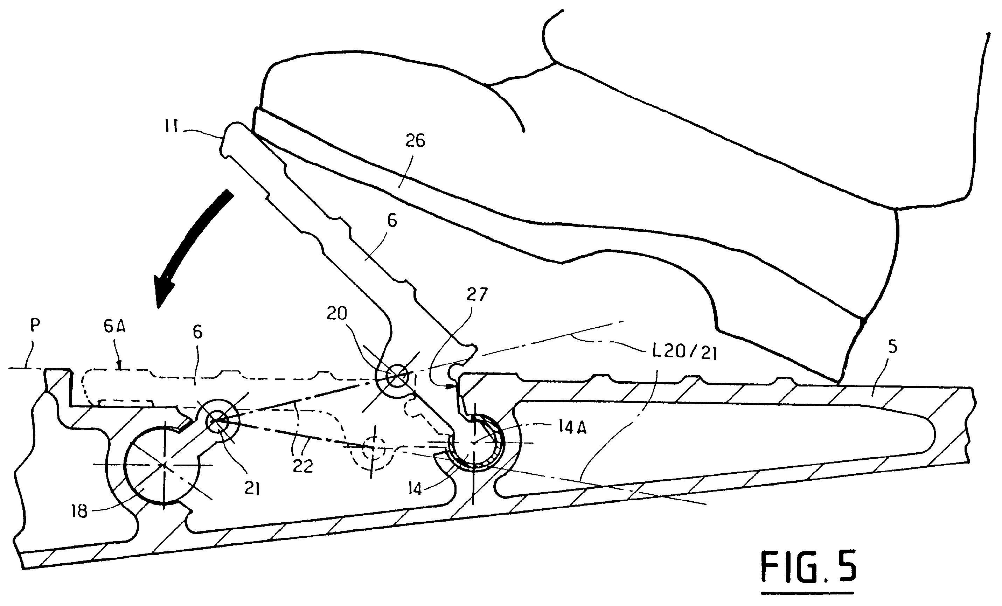

Quand enfin l'utilisateur, à partir de l'une des configurations de la figure 4 souhaite retrouver celle, stable, de la figure 3, il lui suffit, à partir des configurations de la figure 4, de déplacer le boulon 12 de sa deuxième vers sa première position, d'obtenir ainsi la configuration de la figure 5 dans laquelle l'arbre de bras 18 est placé dans sa première position extrême, et de faire pivoter le volet 6 jusqu'à sa mise en place dans la configuration de la figure 3, dans laquelle la face supérieure 6A du volet 6 est contenue dans le plan P. Pour ce faire, l'utilisateur peut, par exemple, appuyer avec son pied 26.

Ainsi, les manutentions de chariots sont simples, effectuées en toute sécurité, et n'exigent pas que l'utilisateur soit en même temps un acrobate apte, en se tenant debout sur un pied, à pousser le chariot 9, et, simultanément à commander avec l'autre pied la position du volet 6, ce qui était le cas avec les hayons élévateurs connus antérieurement.

Il reste conforme à l'invention de réaliser le déplacement du bras 19 par coulissement en remplacement du pivotement décrit ci-avant.

## Revendications

1. Hayon élévateur attelé au plateau de transport (1) d'un véhicule et comportant :
- une plate-forme (5) susceptible de constituer le support temporaire d'un chariot (9) ou analogue muni d'organes de roulement (10) ;
- une butée de maintien d'un tel chariot sur la plate-forme comprenant un volet (6), qui est monté pivotant (14-16), autour d'un axe de volet (14A), par rapport à la plate-forme (5), qui comporte une lisière mobile (11), et, qui est susceptible d'occuper deux positions particulières par rapport à la plate-forme, une première position (figure 3) dans laquelle la face supérieure (6A) du volet (6) est contenue dans le plan (P) de la face supérieure (5A) de la plate-forme (5), et, une deuxième position (figure 4) dans laquelle la face supérieure (6A) du volet (6) est décalée angulairement (A) par rapport à la face supérieure (5A) de la plate-forme (5), ladite lisière mobile (11) étant alors disposée en saillie par rapport à ladite face supérieure (5A) de la plate-forme (5) ;
- un organe élastique (22) attelé entre la plate-forme et le volet (6) et exerçant sur ledit volet une force de rappel dont l'effet, d'une part, dans la première position du volet, est de maintenir ledit volet dans sa première position, d'autre part, dans la deuxième position du volet, est de rappeler ledit volet dans sa deuxième position.
caractérisé en ce que :
a) l'organe élastique (22) est attelé à la plate-forme par l'intermédiaire d'un bras (19), qui est monté mobile par rapport à la plate-forme entre deux positions extrêmes et qui est donc susceptible de modifier la position de l'attache (21) de l'organe élastique (22) par rapport à la plate-forme (5) ;
b) dans la première position du volet (6), d'une part, dans sa première position extrême (figure 3), le bras (19) a placé ladite attache (21) de l'organe élastique (22) de manière que la ligne (L20/21) joignant les points d'attache (21-20) de l'organe élastique (22) sur le bras (19) et sur le volet (6) soit disposée d'un premier côté de l'axe de pivotement (14A) du volet (6) par rapport à la plate-forme et que l'effet de rappel de l'organe élastique sur le volet tende à maintenir ledit volet dans sa première position, d'autre part, dans sa deuxième position extrême (figure 4), le bras (19) a placé ladite attache (21) de l'organe élastique de manière que la ligne (L20/21) joignant les points d'attache (21-20) de l'organe élastique sur le bras (19) et sur le volet (6) soit disposée du côté de l'axe de pivotement (14A) du volet (6) par rapport à la plate-forme opposé audit premier côté et qu'alors l'effet de rappel de l'organe élastique sur le volet tende à pousser ledit volet vers sa deuxième position ; et,
c) ledit bras (19) est attelé à une commande volontaire (12) de sélection de ses deux positions extrêmes, apte à le placer, à la volonté d'un utilisateur, dans l'une ou l'autre desdites deux positions extrêmes.

2. Hayon élévateur selon la revendication 1, caractérisé en ce que le bras (19) est monté à pivotement (15A) par rapport à la plate-forme (5).

3. Hayon élévateur selon la revendication 2, caractérisé en ce que le bras (19) est solidaire d'un arbre de bras (18) qui en réalise le montage à pivotement, cependant que la commande de sélection de position du bras comprend au moins un levier (12) à deux positions, qui est solidaire dudit bras vis-à-vis du pivotement.

4. Hayon élévateur selon la revendication 3, caractérisé en ce que le levier est constitué par un boulon (12), qui est vissé dans l'arbre de bras (19).

5. Hayon élévateur selon l'une quelconque des revendications 1 à 4, caractérisé en ce que l'organe élastique est constitué par un ressort de compression (22).

6. Hayon élévateur selon l'une quelconque des revendications 1 à 5, caractérisé en ce que la plate-forme (5) est réalisée en un matériau extrudé, tel qu'un alliage d'aluminium, les logements (14-15) des arbres réalisant les pivotements du volet (6) et du bras (19) par rapport à la plate-forme (5) étant formés lors de l'extrusion de ladite plate-forme.

7. Hayon élévateur selon l'une quelconque des revendications 1 à 6, caractérisé en ce que le volet (6) est solidaire d'un arbre de volet (16), dont une dimension transversale externe (E16) est au plus égale à celle (E29) d'une ouverture longitudinale (29) que comporte un logement d'arbre (14) ménagé dans la plate-forme (5), ce qui permet l'introduction dudit arbre de volet (16) dans ledit logement (14), cependant qu'un coussinet (17), ayant une forme correspondant à l'espace compris entre l'arbre de volet et son logement, est introduit, par une extrémité longitudinale de l'arbre de volet (16), dans ledit espace et placé entre ledit arbre de volet (16) et son logement (14).

8. Hayon élévateur selon la revendication 7, caractérisé en ce que l'arbre de volet (16) a une face cylindrique circulaire (16C), dont le diamètre (D16) est supérieur à la largeur (E29) de l'ouverture longitudinale (29) du logement (14) et qui est munie d'un méplat (16B), la distance (E16) entre le méplat (16B) et la face cylindrique (16C) opposée de l'arbre de volet (16) étant au plus égale à ladite largeur (E29) de l'ouverture longitudinale.

## Patentansprüche

1. Hebbare Ladeklappe, die an die Ladefläche (1) eines Fahrzeugs gekoppelt ist und folgende Teile umfaßt:
- eine Bühne (5), die vorübergehend Standplatz für einen mit Rollvorrichtungen (10) versehenen Karren (9) o.ä. sein kann;
- einen Haltestopper für einen solchen Karren auf der Bühne, umfassend eine Klappe (6), die bezüglich der Bühne (5), die eine bewegliche Leiste (11) aufweist, schwenkbar (14-16) um eine Klappenachse (14A) montiert ist, und die gegenüber der Bühne zwei verschiedene Positionen einnehmen kann, und zwar eine erste Position (Fig. 3), in der die Oberseite (6A) der Klappe (6) plan mit der Ebene (P) der Bühnenoberseite (5A) ist, und eine zweite Position (Fig. 4), in der die Oberseite (6A) der Klappe (6) bezüglich der Bühnenoberseite (5A) winklig (A) versetzt ist, wobei die bewegliche Leiste (11) dann gegenüber dieser Bühnenoberseite (5A) heraussteht;
- eine zwischen Bühne und Klappe (6) gekoppelte elastische Vorrichtung (22), die auf diese Klappe eine Rückholkraft ausübt, welche zum einen in der ersten Klappenposition die Klappe in ihrer ersten Position hält und zum anderen in der zweiten Klappenposition die Klappe in ihre zweite Position zurückholt,
dadurch gekennzeichnet, daß
a) die elastische Vorrichtung (22) an die Bühne mittels eines Arms (19) gekoppelt ist, der bezüglich der Bühne beweglich montiert ist zwischen zwei Endstellungen, und der somit die Position der Befestigung (21) der elastischen Vorrichtung (22) bezüglich der Bühne (5) verändern kann,
b) in der ersten Stellung der Klappe (6) zum einen der Arm (19) in seiner ersten Endstellung (Fig. 3) diese Befestigung (21) der elastischen Vorrichtung (22) so plaziert hat, daß die die Befestigungspunkte (21-20) der elastischen Vorrichtung (22) am Arm (19) und an der Klappe (6) verbindende Linie (L20/21) auf einer ersten Seite der Schwenkachse (14A) der Klappe (6) bezüglich der Bühne angeordnet ist, und daß die Rückholwirkung der elastischen Vorrichtung auf die Klappe diese Klappe in ihrer ersten Position zu halten sucht, und hat der Arm (19) zum anderen in seiner zweiten Endstellung (Fig. 4) diese Befestigung (21) der elastischen Vorrichtung so plaziert, daß die die Befestigungspunkte (21-20) der elastischen Vorrichtung am Arm (19) und an der Klappe (6) verbindende Linie (L20/21) auf der Seite der Schwenkachse der Klappe bezüglich der Bühne angeordnet ist, die der ersten Seite entgegengesetzt ist, und daß dann die Rückholwirkung der elastischen Vorrichtung auf die Klappe diese Klappe in ihre zweite Position zurückzudrücken sucht, und
c) der Arm (19) mit einer willkürlichen Wahlregelung (12) zwischen seinen beiden Endstellungen verbunden ist, mit der er nach dem Willen eines Benutzers in die eine oder andere dieser beiden Endstellungen gebracht werden kann.

2. Hebbare Ladeklappe nach Anspruch 1, dadurch gekennzeichnet, daß der Arm (19) schwenkend (15A) zur Bühne (5) montiert wird.

3. Hebbare Ladeklappe nach Anspruch 2, dadurch gekennzeichnet, daß der Arm (19) fest verbunden ist mit einer Armwelle (18), mit deren Hilfe er schwenkend montiert wird, wohingegen die Wahlstellungsregelung des Arms mindestens einen Hebel (12) mit zwei Stellungen umfaßt, der gegenüber dem Schwenken fest mit diesem Arm verbunden ist.

4. Hebbare Ladeklappe nach Anspruch 3, dadurch gekennzeichnet, daß der Hebel aus einem in die Welle des Arms (19) geschraubten Bolzen (12) besteht.

5. Hebbare Ladeklappe nach einem der Ansprüche 1 bis 4, dadurch gekennzeichnet, daß die elastische Vorrichtung aus einer Druckfeder (22) besteht.

6. Hebbare Ladeklappe nach einem der Ansprüche 1 bis 5, dadurch gekennzeichnet, daß die Bühne (5) aus einem extrudierten Material wie einer Aluminiumlegierung besteht, wobei die Aufnahmeräume (14-15) der Wellen, in denen die Klappe (6) und der Arm (19) zur Bühne (5) schwenken, beim Extrudieren dieser Bühne gebildet werden.

7. Hebbare Ladeklappe nach einem der Ansprüche 1 bis 6, dadurch gekennzeichnet, daß die Klappe (6) fest mit einer Klappenwelle (16) verbunden ist, deren eine äußere Querabmessung (E16) höchstens gleich der (E29) einer Längsöffnung (29) ist, die sich in einem in die Bühne (5) gearbeiteten Aufnahmeräume (14) für die Wellen befindet, wodurch diese Klappenwelle (16) in diesen Aufnahmeraum (14) eingeführt werden kann, während ein Lager (17), dessen Form dem Raum zwischen der Klappenwelle und ihrem Aufnahmeraum entspricht, bon einem Längsende der Klappenwelle (16) her in diesen Raum und zwischen die Klappenwelle (16) und ihren Aufnahmeraum (14) geführt wird.

8. Hebbare Ladeklappe nach Anspruch 7, dadurch gekennzeichnet, daß die Klappenwelle (16) eine kreisförmige, zylindrische Seite (16C) hat, deren Durchmesser (D16) größer als die Längsöffnung (29) des Aufnahmeraums (14) breit (E29) ist, und die eine Abflachung (16B) aufweist, wobei der Abstand (E16) zwischen der Abflachung (16B) und der gegenüberliegenden, zylindrischen Seite (16C) der Klappenwelle (16) höchstens gleich dieser Breite (E29) der Längsöffnung ist.

## Claims

1. Lifting tailgate coupled to the transport bed (1) of a vehicle and comprising:
- a platform (5) capable of forming a temporary support for a trolley (9) or the like provided with running gear (10);
- a stop for keeping such a trolley on the platform comprising a flap (6) which is mounted for pivoting (14-16) about a flap axis (14A) relative to the platform (5), which comprises a movable edge (11) and which is capable of occupying two particular positions relative to the platform, a first position (Fig. 3) in which the upper surface (6A) of the flap (6) is contained in the plane (P) of the upper surface (5A) of the platform (5), and a second position (Fig. 4) in which the upper surface (6A) of the flap (6) is angularly offset (A) relative to the upper surface (5A) of the platform (5), said movable edge (11) then projecting from said upper surface (5A) of the platform (5);
- a resilient member (22) coupled between the platform and the flap (6) and exerting on said flap a return force of which the effect, on the one hand in the first position of the flap, is to keep said flap in its first position, and on the other hand in the second position of the flap, is to return said flap to its second position,
characterised in that:
a) the resilient member (22) is coupled to the platform by means of an arm (19) which is mounted for movement relative to the platform between two end positions and which is therefore capable of modifying the position of the attachment (21) of the resilient member (22) relative to the platform (5);
b) in the first position of the flap (6), on the one hand in its first end position (Fig. 3), the arm (19) has placed said attachment (21) of the resilient member (22) so that the line (L20/21) joining the points of attachment (21-20) of the resilient member (22) to the arm (19) and to the flap (6) is arranged on a first side of the pivot axis (14A) of the flap (6) relative to the platform and so that the return effect of the resilient member on the flap biases said flap into its first position, and on the other hand in its second end position (Fig. 4), the arm (19) has placed said attachment (21) of the resilient member so that the line (L20/21) joining the points of attachment (21-20) of the resilient member to the arm (19) and to the flap (6) is arranged on the side of the pivot axis (14A) of the flap (6) relative to the platform opposite said first side and so that the return effect of the resilient member on the flap then biases said flap into its second position; and
c) said arm (19) is coupled to a voluntary control means (12) for selecting its two end positions, adapted to place it as the user wishes in either of said two end positions.

2. Lifting tailgate according to claim 1, characterised in that the arm (19) is mounted for pivoting (15A) relative to the platform (5).

3. Lifting tailgate according to claim 2, characterised in that the arm (19) is rigidly connected to an arm shaft (18) which provides the pivotable mounting thereof, but in that the control means for selecting the position of the arm comprises at least one lever (12) with two positions, which is rigidly connected to said arm with respect to pivoting.

4. Lifting tailgate according to claim 3, characterised in that the lever consists of a bolt (12) which is screwed into the shaft of the arm (19).

5. Lifting tailgate according to any of claims 1 to 4, characterised in that the resilient member consists of a compression spring (22).

6. Lifting tailgate according to any of claims 1 to 5, characterised in that the platform (5) is made of an extruded material such as an aluminium alloy, the receptacles (14-15) of the shafts which carry out pivoting of the flap (6) and arm (19) relative to the platform (5) being formed during extrusion of said platform.

7. Lifting tailgate according to any of claims 1 to 6, characterised in that the flap (6) is rigidly connected to a flap shaft (16) of which an outside transverse dimension (E16) is at most equal to that (E29) of a longitudinal opening (29) which a shaft receptacle (14) formed in the platform (5) comprises, which allows the introduction of said flap shaft (16) into said receptacle (14), but in that a bearing bush (17) having a shape corresponding to the space between the flap shaft and its receptacle is introduced, by a longitudinal end of the flap shaft (16), into said space and placed between said flap shaft (16) and its receptacle (14).

8. Lifting tailgate according to claim 7, characterised in that the flap shaft (16) has a circular cylindrical surface (16C) of which the diameter (D16) is greater than the width (E29) of the longitudinal opening (29) of the receptacle (14) and which is provided with a flattened portion (16B), the distance (E16) between the flattened portion (16B) and the opposed cylindrical surface (16C) of the flap- shaft (16) being at most equal to said width (E29) of the longitudinal opening.
